# EUROPEAN PATENT APPLICATION

(11) **EP 1 021 025 A1**
(43) Date of publication of application: **19.07.2000**
(21) Application number: 99100830.1
(22) Date of filing: 18.01.1999
(51) Int. Cl.: H04M 1/02, H04B 1/38

(54) **Hand-holdable radio communication device**

(71) Applicant: Sony International (Europe) GmbH, 50829 Köln (DE)
(72) Inventor: Schweikle, Andreas, c/o Sony Inter. Europe GmbH, 85609 Aschheim (DE)
(74) Representative: Körber, Martin, Dipl.-Phys.

(57) **Abstract**

The present invention relates to a radio communication device for hand hold use, comprising a housing having a top side (7), a bottom side (6), opposite to the top side (7), a front part (2) and a back part (3) opposite to the front part (2), whereby the back part (3) has from the top side (7) to the bottom side (6) generally a smooth shape. The radio communication device comprises a speaker unit (4) at the front part (2) in the region of the top side (7), a microphone unit (5) in the region of the bottom side (6). Further, an internal antenna (8) is located under the back part (3) of the housing, and a touchable keep off means (9) is located at the back part (3), to break the smooth shape of the back part (3) for preventing a user's hand holding the device from touching an area (12) of the back part (3) of the housing between the section of the back part (3), which covers the internal antenna (8), and the top side (7) of the housing. Thereby a shielding of the internal antenna (8) by the hand of a user holding the communication device during use is prevented.

## Description

The present invention relates to a radio communication device for hand hold use, and specifically a mobile phone.

Radio communication devices for hand hold use, as e. g. mobile telephones, are devices for transmitting and receiving information to and from a base station over a wireless transmission link. For the transmission and reception of electromagnetic signals carrying the information to be transmitted, antennas are provided in or on the housing of the devices. Thereby, different types of antennas are in actual use. External or at least partially external antennas have an antenna part extending or projecting from the housing. This antenna type is very inconvenient for the user, since the projecting part of the antenna enlarges the size of the phone and is subject to breakage or other damages.

Another type of antennas used in portable radio communication devices are internal antennas located inside the housing of the device. Although this type of antennas has the advantage of not having a projecting part extending from the housing and thus are not subject to damages, there is a risk that an internal antenna is shielded by the hand of a user holding the radio communication device.

US 4,980,694 describes a hand holdable radio communications device with an internal antenna. In this device the internal antenna is located close to the backside of the housing of the communication device, where a user usually graps and holds the device. Since the performance of the internal antenna can be strongly decreased, if the transmitting/receiving part of the antenna is shielded by a user's hand, in this document it is recommanded, to position the antenna in the upper portion of the communication device. The device, described in the US 4,980,694, is big enough, that a user grasps it in a more centrally located region, e.g., behind a keypad for the device. When a communication device will be small enough, to be totally covered by the hand of the user, it might be not enough, to place the internal antenna in its upper portion.

The object of the present invention is therefore to provide a radio communication device for hand hold use comprising an internal antenna, in which the problem of shielding the internal antenna by users hand can be avoided, even if the housing of such a device is very small.

This object is achieved by a radio communication device for hand hold use according to claim 1, which comprises a housing having a top side, a bottom side, opposite to the top side, a front part and a back part opposite to the front part, whereby the back part has from the top side to the bottom side generally a smooth shape, a speaker unit at the front part in the region of the top side, a microphone unit in the region of the bottom side, an internal antenna located under the back part of the housing, and a touchable keep off means located at the back part and breaking the smooth shape of the back part for preventing a user's hand holding the device from touching an area of the back part of the housing between the section of the back part, which covers the internal antenna, and the top side of the housing.

By providing the keep off means as proposed, an area on the back part of the housing between a location above the internal antenna and the top side of the housing is kept free from a user's hand holding the device. Thus, the keep off means is particularly advantageous in case of small portable communication devices since in this case there exists a higher risk that the user's hand covers the entire or almost the entire device with his hand.

User's usually tend to grab a portable radio communication device in the region of the bottom part or at least in the corresponding lower part of the housing, whereby the finger of the hand extends towards the top side of the housing. On the basis of these observations it is particularly advantageous, if the keep off means of the present invention is designed to urge the fingers of the user's hand into a certain position on the back part of the housing. Particularly if the internal antenna is located closer to the top side than to the bottom side of the housing, the correspondingly designed keep off means urges the fingers into a certain position so that the area between the top side of the housing and the internal antenna is prevented from being touched.

Advantageously the keep off means comprises at least one edge, generally transverse to the direction from the bottom side of the housing to the top side and more closed to the top side. The shape of the back part slopes hereby in both directions from this edge to the top side and to the bottom side of the housing. Prefereably this edge has the shape of a ridge or a peak respectively. Having an edge which such a shape f.e. in the upper half of the back side of the housing, a user of such a radio communication device prefereably supports the back side of the housing with his finger tips under the edge, i.e. in the direction of the bottom side.

Advantageously, the keep off means is a dent in the surface of the back part of the housing. The dent is here a hollow part of the back part of the housing, into which the fingers of a user's hand are automatically urged upon grabbing the communication device.

Instead of a dent, a depression or recess can be used, which have the same function as a dent, namely to provide a hollow part in which the fingers of a user's hand holding the device are placed.

Advantageously, the dent extends essentially transverse to the direction from the bottom side to the top side of the housing. The slightly elongated shape of the dent ensures that depending on the particular position of the user's hand all two or three fingers extending toward the top side of the housing are urged into the dent. Further advantageously, the dent has essentially a concave shape, so that the fingers of a user's hand have a comfortable position within the dent.

Further advantageously, the dent comprises an edge in direction to the top side of the housing and/or a smooth transmission section in direction to the bottom side of the housing, whereby said edge has at least the same distance from the top side of the housing as a mainly radiating part of the internal antenna. The provision of the edge in direction to the top side of the housing ensures, that the fingers of a user's hand holding the communication device are urged into the dent and remain there, since they are hindered by the edge to move towards the top side of the housing. On the other hand, the smooth transmission section in direction to the bottom side of the housing ensures a comfortable position for the user's hand on the back part of the housing.

The present invention is explained in more detail in the following description of a preferred embodiment relating to the enclosed drawings, in which
figure 1 shows a perspective view of a communication device according to the present invention,
figure 2 shows another perspective view of the communication device shown in figure 1,
figure 3 shows a back view of the communication device shown in figure 1, and
figure 4 shows a side view of the communication device shown in figure 1.

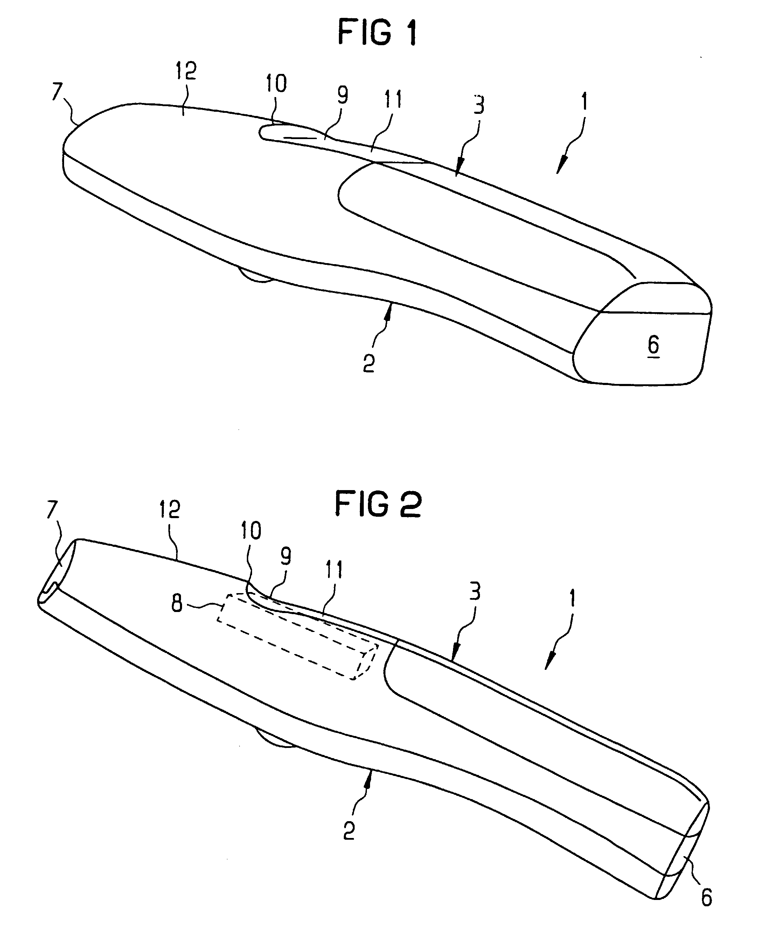

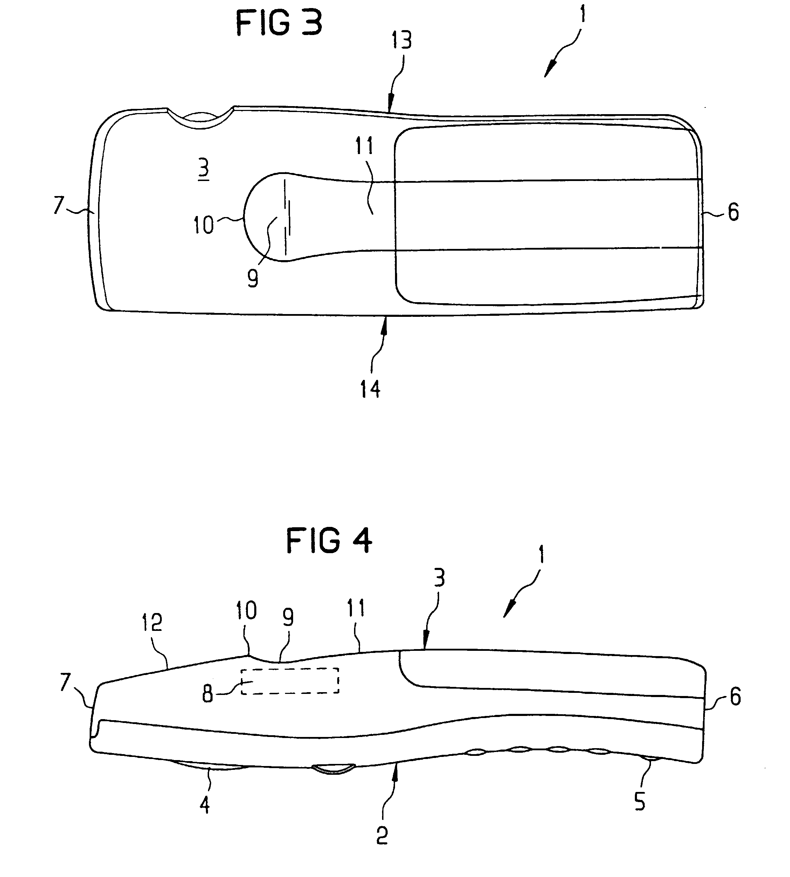

In figure 1, a perspective view of a radio communication device according to the present invention is shown. The radio communication device shown is a mobile phone 1 comprising a housing having a front part 2 and a back part 3 opposite to the front part 2. The front part 2 is the part of the housing, in which a speaker unit 4 in the region of a top side 7 of the housing and a microphone unit 5 in the region of a bottom side 6 of the housing opposite to the top side 7 are provided. The speaker unit 4 and the microphone unit 5 are schematically shown in figure 4.

The front part 2 of the housing is thus the part of the mobile phone 1, which faces the head of a user during normal use. The bottom side 6 of the housing is the part of the mobile phone 1, which faces the ground during normal use of the mobile phone, whereas the top side 7 of the housing is the part of the mobile phone, which projects upwardly during normal use of the phone.

The back part 3 of the housing has at least partially a curved shape in direction from the bottom side 6 to the top side 7 of the housing. This feature is illustrated in figure 4, which shows a side view of the mobile phone 1. The shown shape of the back part 3 of the mobile phone 1 could also be defined as being arcuate or convex. In any case, the back part 3 of the mobile phone 1 is adapted to the shape of the inner side of a user's hand holding the mobile phone 1 during use. Correspondingly, the middle part of the back part 3 of the mobile phone 1 is elevated in relation to the regions of the bottom side 6 and the top side 7 of the housing.

Further, the back part 3 of the mobile phone 1 has a curved shape in direction from a left side edge 13 to a right side edge 14 of the mobile phone 1. The left side edge 13 and the right side edge 14 of the mobile phone 1 are illustrated in figure 3, whereby the left side edge 13 is the edge on the left side of the mobile phone 1 when looking onto the front part 2 and the right side edge 14 is the edge on the right side of the mobile phone 1 when looking onto the front part 2 of the mobile phone 1. The curved or arcuate shape of the back part 2 of the housing between the left side edge 13 and the right side edge 14 is illustrated in the respective views of figure 1 and figure 2 and provides, together with the curved shape of the back part 3 in direction from the bottom side 6 to the top side 7 of the housing a perfect ergonomic adaptation to the shape of a user's hand.

On the back part 3, a dent 9 as a keep off means for preventing a user's hand holding the mobile phone 1 from touching the area 12 of the back part 3 between the top side 7 of the housing and a location directly above an internal antenna 8 is provided. The internal antenna 8 is shown schematically by dotted lines in figures 2 and 4.

The internal antenna is located directly under the back part 3 of the housing closer to the top side 7 of the housing than to the bottom side 6 of the housing. The distance from the dent 9 to the top side 7 of the housing is essentially 40 to 60% of the distance from the dent 9 to the bottom side 6 of the housing. In this way it is ensured, that an internal antenna 8 located as shown in figures 2 and 4 is not shielded by the hand or the fingers of a user holding the mobile phone 1.

The dent 9 comprises an edge 10 in direction to the top side 7 of the housing, whereby the edge 10 has at least the same distance from the top side 7 of the housing as a mainly radiating part of the internal antenna 8. A user grabbing the mobile phone 1 will be forced by the edge 10 to place his fingers in the dent 9. The dent 9 has a smooth concave shape so that the fingers find a comfortable rest in the dent. Further, the dent 9 comprises a smooth transmission section 10 in direction to the bottom side 6 of the housing. The smooth transmission section 11 provides a comfortable rest for the fingers of a user's hand.

## Claims

1. Radio communication device for hand hold use, comprising
a housing having a top side (7), a bottom side (6), opposite to the top side (7), a front part (2) and a back part (3) opposite to the front part (2), whereby the back part (3) has from the top side (7) to the bottom side (6) generally a smooth shape,
a speaker unit (4) at the front part (2) in the region of the top side (7),
a microphone unit (5) in the region of the bottom side (6),
an internal antenna (8) located under the back part (3) of the housing, and a touchable keep off means (9) located at the back part (3) and breaking the smooth shape of the back part (3) for preventing a user's hand holding the device from touching an area (12) of the back part (3) of the housing between the section of the back part (3), which covers the internal antenna (8), and the top side (7) of the housing.

2. Radio communication device for hand hold use according to claim 1,
**characterized in**,
that the keep off means (9) is designed to urge the fingers of the user's hand into a certain position on the back part (3) of the housing.

3. Radio communication device according to claim 1 or 2,
**characterized in**,
that the keep off means (9) comprises at least one edge (10), generally transverse to the direction from the bottom side (6) of the housing to the top side (7) and more closed to the top side (7), whereby the shape of the back part slopes in both directions from this edge (10) to the top side (7) and to the bottom side (6) of the housing.

4. Radio communication device according to claim 1 or 2,
**characterized in**,
that the keep off means (9) is a dent in the surface of the back part (3) of the housing.

5. Radio communication device according to claim 4,
**characterized in**,
that said dent extends essentially transverse to the direction from the bottom side (6) to the top side (7) of the housing.

6. Radio communication device for hand hold use according to claim 4 or 5,
**characterized in**,
that said dent has essentially a concave shape.

7. Radio communication device for hand hold use according to one of the claims 4 to 6, **characterized in**,
that said dent comprises an edge (10) in direction to the top side (7) of the housing and a smooth transition section (11) in direction to the bottom side (6) of the housing, whereby said edge (10) has at least the same distance from the top side (7) of the housing as a mainly radiating part of the internal antenna (8).
